Europäisches Patentamt

European Patent Office

Office européen des brevets

(11) Numéro de publication: **0 345 110**
**A1**

## (12) DEMANDE DE BREVET EUROPEEN

(21) Numéro de dépôt: **89401318.4**

(51) Int. Cl.⁴: **G 21 C 17/06**

(22) Date de dépôt: **11.05.89**

(30) Priorité: **03.06.88 FR 8807438**

(43) Date de publication de la demande:
**06.12.89 Bulletin 89/49**

(84) Etats contractants désignés:
**BE CH DE ES GB LI SE**

(71) Demandeur: **FRAMATOME**
**Tour Fiat 1, Place de la Coupole**
**F-92400 Courbevoie (FR)**

(72) Inventeur: **Moreau, Bernard**
**18 rue des Roseaux**
**F-78340 Les Clayes Sous Bois (FR)**

(74) Mandataire: **Bouget, Lucien et al**
**Cabinet Lavoix 2, Place d'Estienne d'Orves**
**F-75441 Paris Cédex 09 (FR)**

(54) **Procédé et dispositif de contrôle des parois latérales d'un alvéole de stockage d'un assemblage combustible.**

(57) On déplace un ensemble de détection (20), sous eau à l'intérieur de la piscine de stockage (15) du combustible, sur toute la hauteur et au voisinage d'une paroi de l'alvéole (2). L'ensemble de détection (20) comporte au moins une sonde de contrôle d'épaisseur de matériau. On recueille, depuis une zone (22) située au-dessus de la piscine (15) les indications de la sonde et on compare des indications avec des mesures de référence. Le procédé de contrôle permet de vérifier la présence de matériau absorbant les neutrons dans les parois latérales (10) de l'alvéole (2).

FIG.3

EP 0 345 110 A1

# Description

## Procédé et dispositif de contrôle des parois latérales d'un alvéole de stockage d'un assemblage combustible

L'invention concerne un procédé et un dispositif de contrôle des parois latérales d'un alvéole de stockage d'un assemblage combustible.

Dans les réacteurs nucléaires, en particulier dans les réacteurs nucléaires à eau sous pression, on réalise le stockage des assemblages combustibles irradiés extraits du coeur du réacteur, dans une piscine de stockage et de désactivation disposée à proximité du bâtiment du réacteur.

Les assemblages combustibles irradiés sont plongés dans l'eau de la piscine et immergés sous une profondeur d'eau suffisante pour assurer une protection biologique des zones situées au voisinage de la piscine de stockage.

Afin de faciliter le stockage des assemblages combustibles et d'augmenter la capacité des piscines de stockage, on dispose les assemblages combustibles sortant du coeur du réacteur dans des boîtiers ou alvéoles définissant un logement dont la forme correspond à la forme de l'assemblage combustible et qui sont disposés suivant un arrangement régulier pour constituer un ratelier de stockage d'assemblages combustibles. Les parois des différents boîtiers ou alvéoles constituant un ratelier de stockage sont placées parallèlement les unes aux autres et avec un faible écartement, de façon à diminuer le volume du ratelier de stockage et donc d'augmenter la capacité de stockage de la piscine, tout en gardant la possibilité de refroidir les assemblages combustibles, par l'intermédiaire de lames d'eau en contact avec les parois des alvéoles.

De façon à limiter l'activité et l'échauffement des assemblages combustibles stockés tout en maintenant un écartement faible entre les alvéoles, les parois des alvéoles sont constituées partiellement d'un matériau ayant une forte capacité d'absorption des neutrons. Les produits absorbant les neutrons ou produits neutrophages les plus fréquemment utilisés sont le carbure de bore et le cadmium. Ces produits neutrophages se présentent généralement sous la forme d'une couche disposée entre deux parois en acier inoxydable constituant les faces internes et externes de la paroi de l'alvéole.

De cette manière, le produit neutrophage n'entre pas en contact avec l'eau de la piscine dans la mesure où les parois en acier inoxydable entourant ce matériau sont fixées l'une sur l'autre à leurs extrémités, de façon à constituer une enveloppe étanche. Ces parois qui protègent le matériau neutrophage contre les chocs mécaniques pouvant intervenir lors des manutentions assurent donc également une protection de ce matériau contre la corrosion.

Les alvéoles sont réalisés et construits avec beaucoup de soin, de façon que la double enveloppe renfermant le matériau neutrophage et constituant la paroi de ces alvéoles présente la meilleure étanchéité possible. Cependant, il n'est pas possible de garantir cette étanchéité, pendant de très longues périodes d'exploitation où les alvéoles sont constamment plongés dans l'eau de la piscine de désactivation. D'autre part, au cours des manutentions des alvéoles eux-mêmes ou du combustible nucléaire, il est possible que certaines parties des parois des alvéoles soient détériorées et perdent leur étanchéité.

Dans ce cas, l'eau de la piscine vient en contact avec le matériau neutrophage et peut provoquer une dégradation plus ou moins importante de la couche d'absorption des neutrons dans la paroi de l'alvéole. Il peut en résulter localement une activation et un échauffement anormal des assemblages combustibles. Le séjour des assemblages combustibles dans la piscine de stockage doit être poursuivi pendant un temps suffisant pour que l'activité résiduelle des assemblages soit suffisamment basse pour permettre le transport de ces assemblages vers des sites de retraitement ou de stockage définitif. Après un temps de séjour dans l'eau de la piscine qui peut être de longue durée, l'alvéole de stockage risque donc de ne plus présenter les garanties de sécurité résultant de la présence de parois neutrophages continues entourant les assemblages combustibles.

Dans le cas où un comportement anormal d'un ratelier de stockage est décelé, il peut être nécessaire d'effectuer un changement complet de ce ratelier de stockage après déchargement des assemblages combustibles. Pour éviter une opération aussi complexe, on prévoit généralement des rateliers comportant des alvéoles démontables individuellement qui peuvent être remplacés sur le ratelier de stockage qui reste en place dans la piscine de désactivation.

Cependant, on ne connaissait pas jusqu'ici de procédé et de dispositif permettant de réaliser un contrôle ou une surveillance de l'état des parois absorbantes des alvéoles de stockage d'assemblages combustibles dans une piscine de désactivation.

Le but de l'invention est donc de proposer un procédé de contrôle des parois latérales d'un alvéole de stockage d'un assemblage combustible disposé dans une position immergée, à l'intérieur d'une piscine de stockage sous eau d'assemblages combustibles et comportant des parois latérales verticales renfermant un matériau absorbant les neutrons, ce procédé permettant de déterminer très rapidement et avec une grande sûreté l'état du matériau absorbant les neutrons dans la paroi de l'alvéole.

Dans ce but, on déplace, sous eau, dans la direction verticale, sur toute la hauteur de l'alvéole, au voisinage d'au moins une paroi dont on effectue le contrôle, au moins une sonde de contrôle d'épaisseur de matériau, on recueille depuis une zone située au-dessus de la piscine de stockage, les indications de la sonde et on compare ces indications avec des mesures de référence.

L'invention est également relative à un dispositif de contrôle comportant au moins une sonde à courants de Foucault, des moyens commandés à distance pour déplacer cette sonde sous eau, dans la direction verticale et des moyens de recueil du signal de la sonde.

Afin de bien faire comprendre l'invention, on va maintenant décrire, à titre d'exemple non limitatif, en se référant aux figures jointes en annexe, un mode de réalisation d'un dispositif de contrôle et sa mise en oeuvre dans le cas d'alvéoles de stockage d'assemblages combustibles d'un réacteur nucléaire à eau légère.

La figure 1 est une vue en perspective d'un ratelier de stockage d'assemblages combustibles d'un réacteur nucléaire à eau légère, en position de service dans la piscine de stockage du réacteur.

La figure 2 est une vue en perspective partiellement éclatée d'un alvéole de stockage du ratelier représenté sur la figure 1.

La figure 3 est une vue en élévation et en coupe partielle d'un dispositif de contrôle permettant la mise en oeuvre du procédé suivant l'invention dans la piscine de stockage d'un réacteur nucléaire.

La figure 4 est une vue en coupe d'un alvéole de stockage et d'une partie du dispositif de contrôle comportant des sondes à courants de Foucault en position de service dans cet alvéole.

La figure 5 est une vue à plus grande échelle de l'extrémité inférieure du dispositif de contrôle représenté sur la figure 4.

La figure 6 est une demi-vue en coupe suivant 6-6 de la figure 5.

La figure 7 est une vue en élévation et en coupe partielle de l'extrémité inférieure d'un dispositif de contrôle suivant l'invention et suivant un second mode de réalisation.

La figure 8 est un diagramme montrant l'enregistrement obtenu avec un dispositif à sonde à courants de Foucault suivant l'invention, dans le cas d'une paroi d'alvéole comportant une discontinuité de sa couche de matériau absorbant.

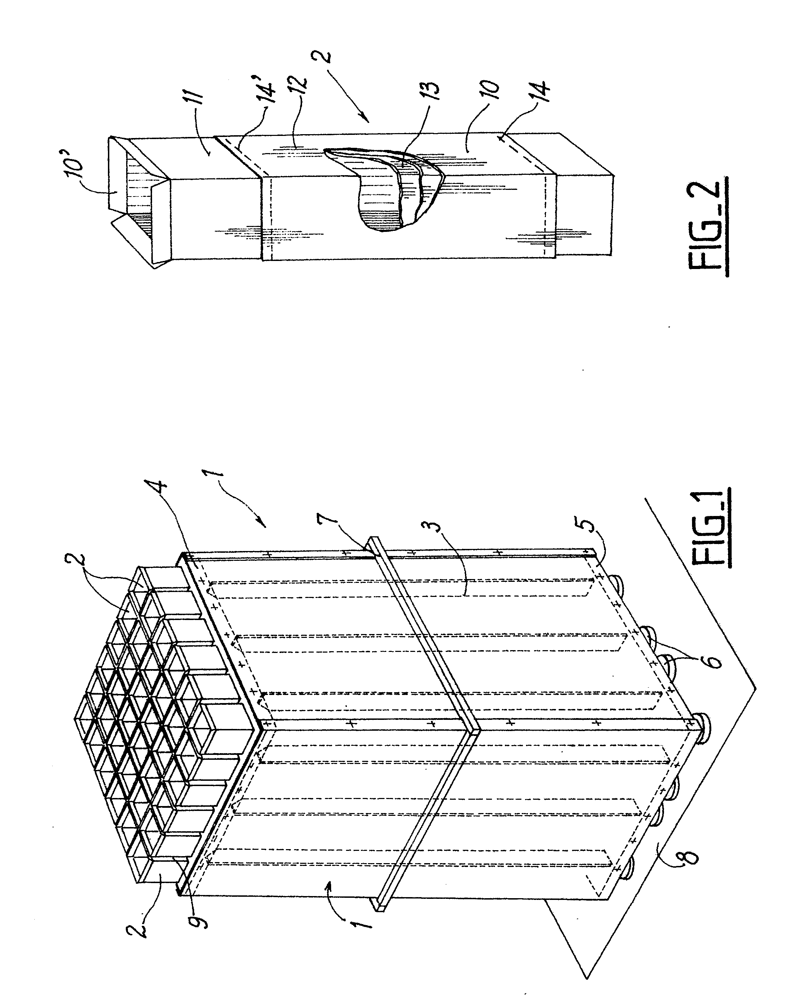

Sur la figure 1, on voit un ratelier de stockage ou rack désigné de manière générale par le repère 1, à section carrée et constitué de trente-six alvéoles 2.

Le rack 1 comporte un bâti constitué par une tôle périphérique 3, une plaque supérieure 4 et une plaque inférieure 5 en acier inoxydable assemblées par soudure. Le bâti du rack de stockage 1 comporte également une ceinture de renforcement 7 et des pieds 6 reposant en service sur le fond 8 de la piscine de stockage de combustible d'un réacteur nucléaire.

La plaque supérieure 4 définit un réseau de logements à pas carré dans lequel viennent s'insérer les alvéoles 2. Lorsque les alvéoles 2 sont en position dans le rack 1, des interstices 9 sont ménagés entre les parois des alvéoles, sur toute la hauteur de ces alvéoles, pour permettre le passage d'une lame d'eau de refroidissement entre les alvéoles destinés à recevoir des assemblages combustibles irradiés.

Les alvéoles 2 sont amovibles à l'intérieur du rack 1 et peuvent être extraits et remplacés en utilisant les moyens de manutention de la piscine de stockage du réacteur.

Sur la figure 2, on voit un alvéole 2 de forme parallélépipédique à section carrée comportant quatre parois latérales 10 évasées à leur partie supérieure 10' pour faciliter l'introduction des assemblages combustibles mis en piscine de stockage.

Dans le cas des réacteurs nucléaires à eau légère construits actuellement, les assemblages combustibles présentent une section carrée d'à peu près 20 cm de côté et une hauteur de 4 m. Les alvéoles de stockage de ces assemblages combustibles présentent des dimensions correspondantes et ont une paroi métallique constituée par une tôle d'acier inoxydable dont l'épaisseur est de l'ordre de 1 à 4 mm, suivant la conception de la paroi qui doit assurer une rigidité suffisante de l'alvéole pour maintenir, entre les parois des alvéoles voisins, des espacements 9 parfaitement déterminés et parfaitement constants.

Les parois latérales 10 de l'alvéole 2 comportent une enveloppe interne en tôle d'acier inoxydable 11, une enveloppe externe 12 également en acier inoxydable entourant l'enveloppe interne 11 à l'exception de ses extrémités et une couche de matériau absorbant 13 intercalée entre l'enveloppe interne 11 et l'enveloppe externe 12.

La couche de matériau absorbant 13 peut être constituée par une feuille de cadmium d'une épaisseur suffisante pour assurer une absorption efficace des neutrons émis par l'assemblage combustible irradié introduit dans l'alvéole 2, à l'intérieur de la piscine de stockage.

L'enveloppe externe 12 est soudée sur l'enveloppe interne 11, suivant deux lignes de soudure continues 14 et 14' de façon que la couche 13 de cadmium soit totalement isolée du milieu extérieur qui est constitué, lorsque l'alvéole est en service, par l'eau de la piscine de stockage.

Après fabrication, l'alvéole 2 est contrôlé soigneusement pour vérifier si la couche absorbante 13 est parfaitement continue sur toute la hauteur de l'alvéole, et en particulier pour vérifier qu'il n'y a pas eu de déchirures locales de la feuille de cadmium lors de l'enfilage sur la paroi interne, à l'exception de ses extrémités non recouvertes par l'enveloppe 12.

Les alvéoles introduits dans les racks de stockage 1 dans la piscine de stockage sont donc munis de parois absorbantes parfaitement continues et ayant une capacité d'absorption des neutrons constante sur toute leur hauteur.

Les enveloppes 11 et 12 de l'alvéole permettent d'autre part de protéger la couche absorbante 13, aussi bien pendant la manutention de l'alvéole que pendant la manutention des assemblages combustibles.

Cependant, il peut se produire accidentellement une certaine perte d'étanchéité de la double enveloppe 11, 12. La couche 13 de cadmium vient alors en contact avec l'eau de la piscine de stockage qui est susceptible de produire une dégradation ou une destruction au moins localisée de la couche absorbante.

Il est donc nécessaire d'effectuer périodiquement des contrôle des parois des alvéoles des racks de stockage, à l'intérieur de la piscine.

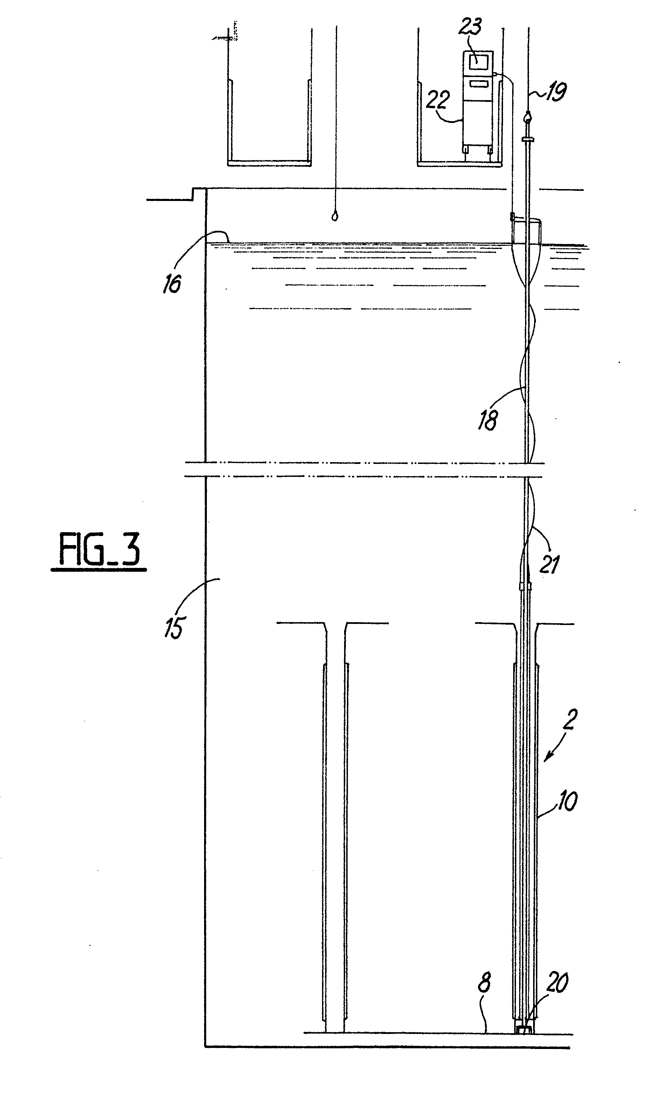

Sur la figure 3, on a représenté un dispositif permettant la mise en oeuvre du procédé de contrôle suivant l'invention ayant pour but la vérification de l'intégrité des parois des alvéoles de stockage.

Le dispositif a été représenté en position de service à l'intérieur d'un alvéole 2 disposé dans un rack de stockage reposant sur le fond 8 d'une piscine de stockage de combustible 15 d'un réacteur nucléaire à eau légère.

Les racks de stockage sont disposés sous eau, le niveau supérieur 16 de la piscine de stockage étant situé à une distance verticale de l'ordre de 10 m au-dessus de la partie supérieure des racks de stockage.

Le dispositif suivant l'invention comporte une perche verticale 18 de grande longueur, cette longueur pouvant être de l'ordre de 15 m, suspendue à l'une de ses extrémités à un câble de levage 19 et portant, à son autre extrémité, un ensemble de détection 20 comportant des sondes d'épaisseur à courants de Foucault qui sera décrit par la suite.

L'ensemble de détection 20 est relié, par l'intermédiaire de câbles 21, à un poste de contrôle 22 situé au-dessus du niveau de remplissage 16 de la piscine et par l'intermédiaire duquel on assure l'alimentation des sondes de mesure et le recueil des signaux provenant de ces sondes. Un écran d'affichage 23 permet de visualiser les signaux et l'état des parois en cours de contrôle.

Le câble de levage 19 est relié à un appareil de levage équipant la piscine de stockage et permet de déplacer, suivant la direction verticale, l'ensemble de détection 20, au voisinage des parois 10 de l'alvéole 2.

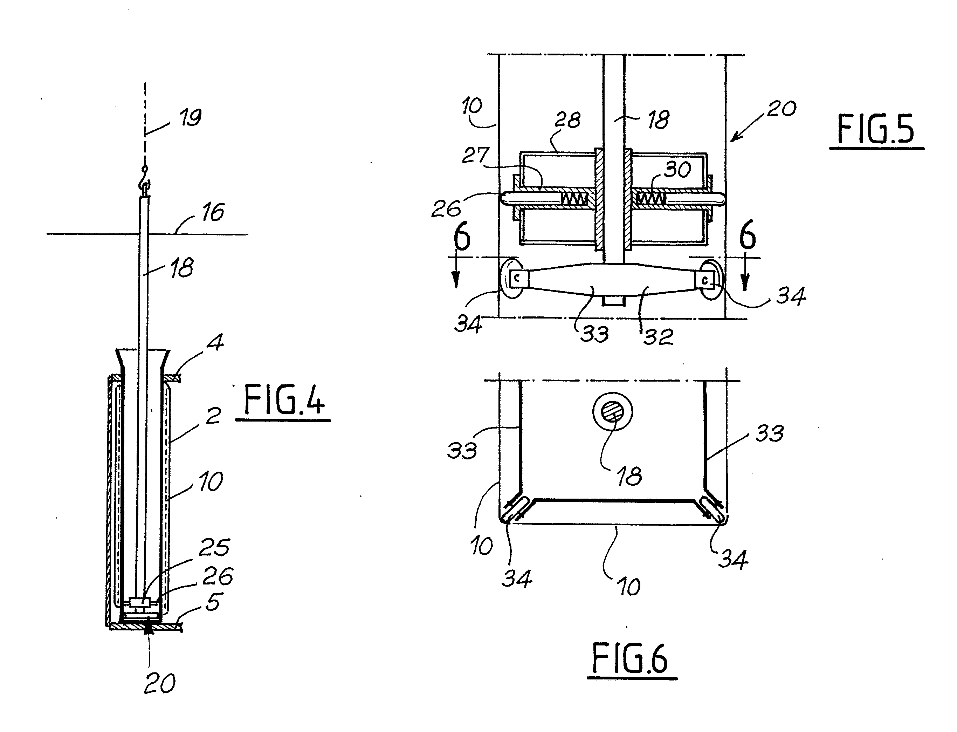

Sur la figure 4, on voit que l'ensemble de détection 20 comporte un ensemble de sondes à courants de Foucault 25 comportant des éléments sensibles 26 de direction radiale dont l'extrémité est maintenue en contact avec la surface intérieure d'une paroi 10 de l'alvéole, pendant le déplacement vertical de l'ensemble de détection 20, à l'intérieur de l'alvéole 2. L'ensemble de détection 20 comporte deux sondes sensibles 26 associées à chacune des parois 10 de l'alvéole dont on assure le contrôle.

Sur les figures 5 et 6, on voit que les sondes sensibles 26 sont montées coulissantes dans une direction transversale perpendiculaire à l'axe de la perche 18, à l'intérieur d'un support 27 monté dans un bâti 28 solidaire de la perche 18 du dispositif. Les sondes 26 sont poussées vers l'extérieur, c'est-à-dire dans un sens opposé à l'axe de la perche 18, par des ressorts 30 qui permettent de maintenir leur extrémité en contact avec la surface intérieure de la paroi 10 de l'alvéole.

L'extrémité inférieure de la perche 18 est solidaire d'un ensemble de guidage 32 constitué sous la forme d'un chariot comportant un bâti 33 et quatre roues 34 venant en appui dans les angles de l'alvéole, à la jonction de deux parois 10. On maintient ainsi un centrage parfait de l'ensemble de détection 20 à l'intérieur de l'alvéole, pendant les déplacements verticaux de cet ensemble.

Les sondes d'épaisseur 26 qui sont reliées au poste de contrôle 22 par l'intermédiaire de câbles 21 émettent des signaux dont la forme et l'amplitude dépendent de l'épaisseur de matériau constituant la paroi 10. Ces signaux sont enregistrés et visualisés sur l'écran 23.

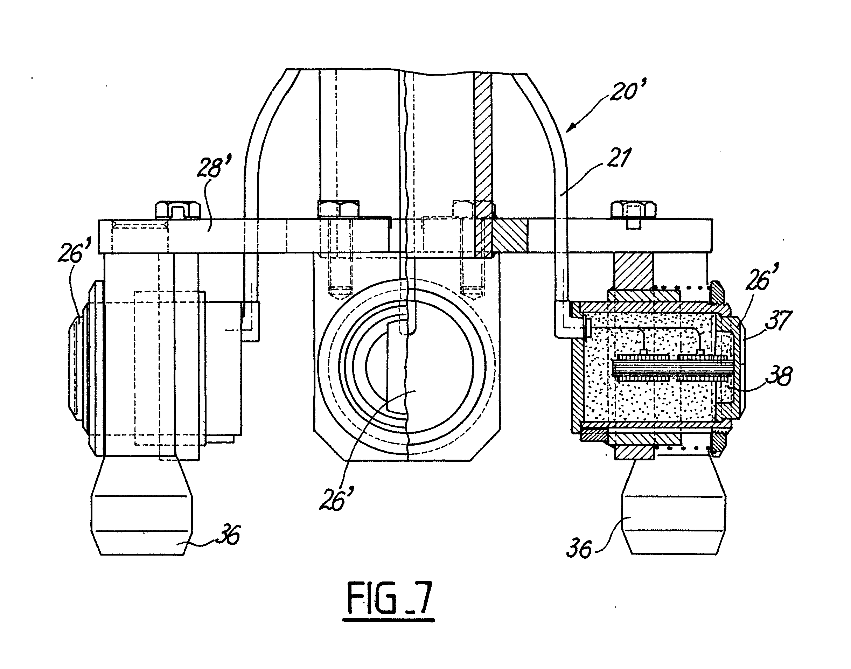

Sur la figure 7 on a représenté une variante de réalisation de l'ensemble de détection 20' d'un dispositif de contrôle suivant l'invention. Le bâti 28' de l'ensemble 20' porte quatre sondes à courants de Foucault 26' qui sont disposées à 90° les unes par rapport aux autres. Le dispositif 20', en position de service à l'intérieur d'un alvéole 2, assure son propre centrage et son propre guidage, l'extrémité extérieure de chacune des sondes 26' venant en contact avec la surface intérieure de l'une des quatre parois de l'alvéole.

Le support 28' est également solidaire de pieds 36 qui viennent reposer sur le fond de l'alvéole, lorsque le dispositif est dans sa position basse, au début ou à la fin du contrôle.

Chacune des sondes 26' comporte une partie d'appui extérieure 37 venant en contact avec la paroi de l'alvéole et une partie sensible 38 reliée par des câbles 21 au poste de contrôle 22.

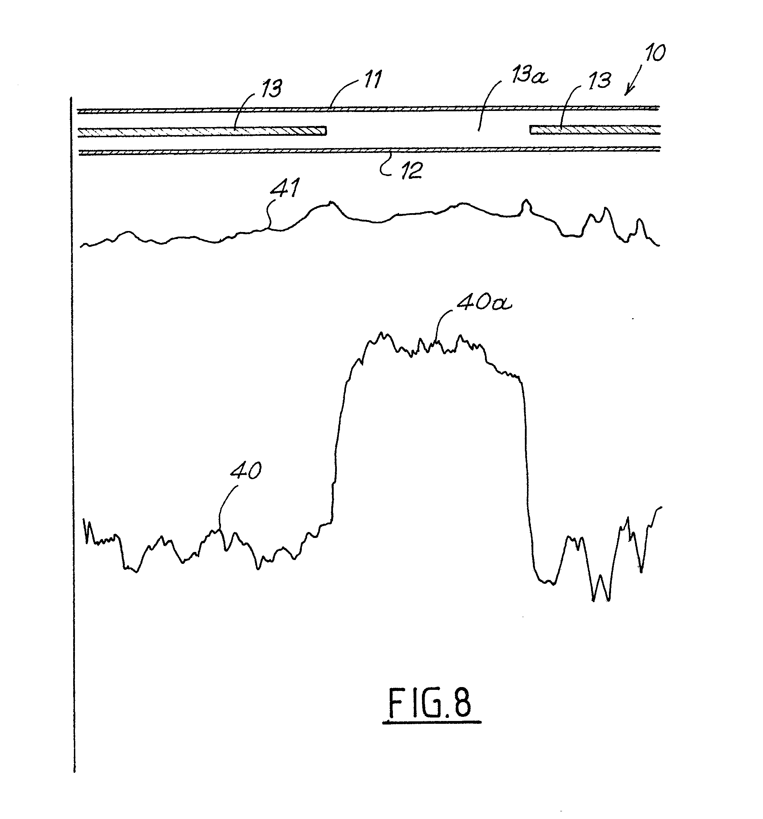

Sur la figure 8, on a représenté, de manière schématique, dans la partie supérieure du diagramme, la structure d'une paroi 10 d'un alvéole sur lequel on effectue un contrôle suivant l'invention.

On a également reporté sur la figure 8 le signal 40 d'une sonde à courants de Foucault, lors de son déplacement suivant la direction longitudinale de la paroi 10 et un signal de référence 41 correspondant relatif, par exemple, à la paroi 10 de l'alvéole neuf sortant de fabrication.

La paroi 10 comporte une enveloppe interne 12 en acier inoxydable constituée par un feuillard ayant une épaisseur de 2 mm. L'enveloppe externe 11 est également constituée par un feuillard d'acier inoxydable d'une épaisseur de 0,8 mm.

Entre l'enveloppe 11 et l'enveloppe 12 est disposée une plaque de cadmium 13 d'une épaisseur de 0,5 millimètre qui est interrompue dans une zone 13a ayant une certaine longueur dans la direction longitudinale de la paroi 10.

Comme il est visible sur la courbe inférieure de la figure 8, le signal 40 d'une sonde à courants de Foucault déplacée au contact ou au voisinage de la paroi 10 subit un changement de niveau 40a correspondant à la zone 13a où la couche absorbante 13 de la paroi 10 est interrompue. Le signal de référence 41 correspond par exemple au signal obtenu dans des conditions équivalentes sur la paroi 10 de l'alvéole sortant de fabrication. Le signal 41 est à un niveau sensiblement constant.

Le signal 41 peut également correspondre au signal donné par l'une des sondes de l'ensemble de détection 20 (ou 20') disposée au voisinage d'une des parois de l'alvéole qui ne présente pas de défaut en ce qui concerne sa couche d'isolation 13.

Le signal de référence de la paroi 10 peut être enregistré, sur l'alvéole neuf sortant de fabrication, en utilisant un dispositif mobile tel que celui qui a été décrit ou, au contraire, en utilisant un appareillage fixe à sonde de mesure d'épaisseur à courants de Foucault dans lequel on déplace l'alvéole.

Lorsqu'on a décelé une paroi 10 d'un alvéole présentant une zone où la couche absorbant les neutrons est défectueuse, on effectue le changement de cet alvéole et son remplacement par un alvéole neuf.

L'intégrité des parois des alvéoles peut être vérifiée systématiquement avant d'introduire des assemblages irradiés dans ces alvéoles. On peut également effectuer ce contrôle, de façon programmée, après un certain temps de séjour dans la piscine de stockage du combustible.

L'invention permet donc d'éviter de maintenir dans le piscine de stockage du combustible, des alvéoles dont les parois ont un pouvoir absorbant insuffisant à l'égard des neutrons provenant d'assemblages irradiés.

L'invention ne se limite pas au mode de réalisation qui a été décrit.

C'est ainsi que les sondes d'épaisseur peuvent être des sondes à ultrasons au lieu de sondes à courants de Foucault.

Le matériau absorbant des parois des alvéoles peut être constitué par un autre matériau que le cadmium et par exemple par un composé ou alliage de bore, tel que le carbure de bore.

Le déplacement vertical de l'ensemble de mesure à l'intérieur de l'alvéole peut être réalisé par tout moyen conçu de manière spécifique ou existant parmi les matériels associés à la piscine de stockage des combustibles.

Le nombre de sondes d'épaisseur de l'ensemble de détection peut être quelconque, une ou plusieurs sondes pouvant être associées à chacune des parois de l'alvéole.

Les moyens de guidage de l'ensemble de détection à l'intérieur de l'alvéole peuvent également être constitués de manière quelconque.

Il est également possible d'imaginer des dispositifs de contrôle comportant des ensembles de détection qui se déplacent au voisinage ou au contact de la surface extérieure des parois des alvéoles. On peut par exemple imaginer un ensemble de détection ayant un bâti en forme d'équerre portant au moins deux sondes susceptibles d'effectuer un balayage de la surface extérieure des parois dirigées vers l'extérieur des alvéoles situés dans les angles du ratelier de stockage.

On peut également imaginer des ensembles de détection ayant une épaisseur inférieure à la largeur de l'espace ménagé entre les alvéoles et susceptibles de se déplacer dans la direction verticale à l'intérieur de cet espace ou de se déplacer dans une direction horizontale à l'intérieur de cet espace lorsque les racks ne comportent pas de ceinture périphérique pleine.

On peut également imaginer des dispositifs permettant de combiner des déplacements verticaux des sondes avec des déplacements horizontaux, soit en translation dans des directions transversales soit en rotation.

Enfin, le procédé et le dispositif suivant l'invention s'appliquent au contrôle sous eau de l'intégrité des parois de tout alvéole de stockage d'assemblages combustibles comportant une couche absorbant les neutrons.

## Revendications

1.- Procédé de contrôle des parois latérales d'un alvéole de stockage (2) d'un assemblage combustible disposé dans une position immergée, à l'intérieur d'une piscine de stockage (15) sous eau d'assemblages combustibles et comportant des parois latérales verticales (10) renfermant un matériau absorbant les neutrons, caractérisé par le fait qu'on déplace sous eau, dans la direction verticale, sur toute la hauteur de l'alvéole (2), au voisinage d'au moins une paroi (10) dont on effectue le contrôle, au moins une sonde de contrôle d'épaisseur de matériau (26, 26'), qu'on recueille depuis une zone (22) située au-dessus de la piscine de stockage (15), les indications de la sonde (26, 26') et qu'on compare ces indications avec des mesures de référence.

2.- Procédé suivant la revendication 1, caractérisé par le fait que la sonde de contrôle d'épaisseur est une sonde à courants de Foucault.

3.- Procédé suivant la revendication 1, caractérisé par le fait que la sonde de contrôle d'épaisseur est une sonde à ultrasons.

4.- Procédé suivant l'une quelconque des revendications 1, 2 et 3, caractérisé par le fait que les mesures de références sont des mesures enregistrées sur la même paroi (10) dont on effectue le contrôle, à l'état neuf, en fin de fabrication de l'alvéole.

5.- Dispositif de contrôle des parois latérales (10) d'un alvéole de stockage (2) d'un assemblage combustible disposé dans une position immergée, à l'intérieur d'une piscine de stockage (15) sous eau d'assemblages combustibles et comportant des parois latérales verticales (10) renfermant un matériau absorbant les neutrons (13), caractérisé par le fait qu'il comporte un ensemble de détection (20, 20') comprenant au moins une sonde de contrôle d'épaisseur (26, 26') et un ensemble de centrage et de guidage (32) disposés à l'extrémité d'une perche (18) reliée à son autre extrémité à un élément de levage (19) ainsi qu'un poste de contrôle (22) situé au-dessus du niveau supérieur (16) de l'eau dans la piscine (15) auquel l'ensemble de détection (20) est relié par au moins un câble électrique (21).

6.- Dispositif suivant la revendication 5, caractérisé par le fait que l'ensemble de détection (20) comporte un support de sondes (27, 28) dans lequel au moins une sonde (26) est montée coulissante dans une direction latérale perpendiculaire à l'axe de le perche (18) et rappelée par un moyen élastique (30), vers l'extérieur, c'est-à-dire dans une direction opposée à l'axe de la perche (18).

7.- Dispositif de contrôle suivant l'une quelconque des revendications 5 et 6, caractérisé par le fait que l'ensemble de centrage et de guidage (32) est constitué par un chariot (33) comportant des roues (34) destinées à venir en appui sur les parois (10) de l'alvéole (2).

8.- Dispositif de contrôle suivant l'une quelconque des revendications 5 et 6, caractérisé par le fait que l'ensemble de centrage et de guidage est constitué par un ensemble de sondes de mesure (26′) destinées à venir en contact avec des parois en vis-à-vis de l'alvéole (2).

9.- Dispositif de contrôle suivant l'une quelconque des revendications 5 à 8, caractérisé par le fait que l'ensemble de détection (20′) comporte des pieds (36) destinés à venir reposer sur le fond de l'alvéole (2), dans une position basse de l'ensemble de détection.

FIG.1

FIG.2

EP 0 345 110 A1

23

22

19

16

18

FIG_3

15

21

2

10

8 20

FIG.4

FIG.5

FIG.6

EP 0 345 110 A1

FIG.7

EP 0 345 110 A1

$\underline{FIG.8}$

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 011 004  (GENERAL ELECTRIC) <br> * Page 2, ligne 118 - page 3, ligne 63; <br> page 3, ligne 63 - page 4, ligne 5; <br> figures 1,2,4 * <br> --- | 1-6,8 | G 21 C  17/06 |
| Y | FR-A-2 541 033  (SOCIETE CELLIER SA ET SUEUR) <br> * Page 1, ligne 26 - page 2, ligne 27; <br> figures 1-4 * <br> --- | 1-6,8 | |
| A | US-A-3 898 741  (W. CASEY) <br> * Colonne 2, lignes 25-62; colonne 4, <br> lignes 23-38; figures 1,2 * <br> ----- | 1,5,7 | |

DOMAINES TECHNIQUES RECHERCHES (Int. Cl.4)

G 21 C  17/00
G 21 C  19/00

Le présent rapport a été établi pour toutes les revendications

| Lieu de la recherche | Date d'achèvement de la recherche | Examinateur |
|---|---|---|
| LA HAYE | 16-08-1989 | JANDL F. |

EPO FORM 1503 03.82 (P0402)